# EUROPEAN PATENT APPLICATION

(11) **EP 3 404 631 A1**
(43) Date of publication of application: **21.11.2018**
(21) Application number: 18171016.1
(22) Date of filing: 07.05.2018
(51) Int. Cl.: G07F 17/32, G07D 5/00, B42D 25/382

(54) **INSPECTION SYSTEM AND GAME TOKEN**

(30) Priority: 19.05.2017 JP 2017099903
(71) Applicant: Angel Playing Cards Co., Ltd., Higashiomi-shi, Shiga 527-0232 (JP)
(72) Inventor: SHIGETA, Yasushi, Shiga, 527-0232 (JP)
(74) Representative: Lang, Johannes

(57) **Abstract**

An inspection system for inspecting a game token, includes: a game token assigned with code information such that an ID mark region covered with a UV ink is partially irradiated with laser light to denature or remove the irradiated part; an ultraviolet irradiation lamp for irradiating the game token with ultraviolet light for visualizing the UV ink; a UV camera configured to shoot the game token irradiated with ultraviolet light; and an inspection device configured to recognize the code information that has been visualized by the irradiation with ultraviolet light based on an image shot by the UV camera and determine authenticity of the game token.

## Description

### CROSS REFERENCE TO RELATED APPLICATION

This nonprovisional application is based on Japanese Patent Application No. 2017-099903 filed with the Japan Patent Office on May 19, 2017, the entire contents of which are hereby incorporated by reference.

### FIELD

The present invention relates to an inspection system for game tokens used in table games, and a game token.

### BACKGROUND AND SUMMARY

Conventionally, table games using game tokens are played in gaming houses such as casinos. Since game tokens can be cashed, counterfeiting is strictly controlled. Various techniques have been proposed and adopted in order to distinguish counterfeit game tokens from genuine game tokens. For example, there is known a method of embedding a Radio-frequency identification (RFID) tag recorded with identification information into a game token and reading the identification information with an RFID reader to determine authenticity of the game token (for example, JP 2008-246103 A).

On the other hand, different values are defined for different types of game tokens, and techniques for detecting the values of the game tokens have also been proposed in order to automate the table games. For example, there is known a method of embedding into a game token an RFID tag recorded with information on a type or a value of the game token and reading the information with an RFID reader to detect the value of the game token (for example, see JP 2008-246103 A).

An object of the present invention is to provide a novel game token that enables determination of authenticity thereof based on an image obtained by shooting by a camera, and an inspection system of inspecting the game token.

According to one aspect of the present invention, there is provided an inspection system for game tokens for games using a game table, including: at least one camera configured to shoot the game tokens; a recording device configured to record types and authenticity of the game tokens using the camera; and an inspection device configured to determine authenticity of the game tokens using a result recorded by the recording device, each of the game tokens is provided with a unique ID for individual identification in appearance, the inspection device reads the unique ID of a target game token for inspection among the game tokens using the camera, and determines authenticity of the target game token based on the read unique ID, and the unique ID for individual identification or for individual identification in a specific group unit is formed by irradiating an ID mark region that is included in each of the game tokens and is formed of a UV ink or an infrared absorbing material with laser light to partially denature or remove the UV ink or the infrared absorbing material that forms the ID mark region.

With this configuration, the unique ID appears in the ID mark region by irradiating the ID mark region on the game token with ultraviolet light or infrared rays, and thus the authenticity can be determined by reading the unique ID of the game token.

In the above inspection system, the unique ID may be associated with any one of a machine used for manufacturing the game tokens, a sequence of manufacture, time of manufacture, and manufacturing information in a database.

With this configuration, any one of a machine used for manufacturing the game tokens, a sequence of manufacture, time of manufacture, and manufacturing information can be determined by reading the ID code.

In the above inspection system, each of the game tokens may further include an RFID or an ID code aside from the unique ID for individual identification that is provided on an outer layer of the game token, the inspection system may further include a database configured to associate the unique ID provided on the outer layer with the RFID or the ID code, and the inspection device may read the unique ID added to the target game token for inspection using the camera, and determines authenticity of the target game token based on a result of comparison of the read unique ID and the RFID or the ID code with contents of the database.

This configuration makes it possible to determine authenticity of each of the game tokens by comparing the unique ID provided using the UV ink or the infrared absorbing material with the RFID or the ID code provided aside from the unique ID.

In the above inspection system, at least one camera may include a normal camera, and an infrared camera or a UV camera, and the inspection device may be configured to determine authenticity of the game tokens using the normal camera, and the infrared camera or the UV camera.

This configuration makes it possible to determine authenticity of the game tokens by shooting the unique ID appeared in the ID mark region with the infrared camera or the UV camera.

In the above inspection system, the unique ID provided on each of the game tokens may be a code expressed by a character or a mark.

With this configuration, the unique ID is expressed by a character or a mark.

In the inspection system, the unique ID provided on each of the game tokens may be transparent.

This configuration makes it possible to add the unique ID without deteriorating the design of each of the game tokens and also improve security.

According to another aspect of the present invention, there is provided a game token comprising a unique ID for individual identification provided on an outer layer of the game token, the unique ID is read by a camera and allows determination of authenticity of the game token, and the unique ID for individual identification or for individual identification in a specific group unit is formed by irradiating an ID mark region that is included in the game token and is formed of a UV ink or an infrared absorbing material with laser light to partially denature or remove the UV ink or the infrared absorbing material that forms the ID mark region.

With this configuration, the unique ID appears in the ID mark region by irradiating the ID mark region on each of the game tokens with ultraviolet light or infrared rays, and thus the authenticity can be determined by reading the unique ID on each of the game tokens.

In the above game token, the unique ID may be associated with any one of a machine used for manufacturing the game tokens, a sequence of manufacture, time of manufacture, and manufacturing information by a database.

With this configuration, any one of a machine used for manufacturing the game tokens, a sequence of manufacture, time of manufacture, and manufacturing information can be determined by reading the ID code.

The above game token may further includes an RFID or an ID code aside from the unique ID for individual identification that is provided on the outer layer of the game token, and by using a database configured to associate the unique ID provided on the outer layer of the game token with the RFID or the ID code, authenticity of the target game token may be determined based on a result of comparison of the unique ID assigned to the target game token and the RFID or the ID code with contents of the database.

This configuration makes it possible to determine authenticity of each of the game tokens by comparing the unique ID provided using the UV ink or the infrared absorbing material with the RFID or the ID code provided aside from the unique ID.

In the above game token, the unique ID provided on the game token may be a code expressed by a character or a mark.

With this configuration, the unique ID is expressed by a character or a mark.

In the above game token, the unique ID provided on the game token may be transparent.

This configuration makes it possible to add the unique ID without deteriorating the design of each of the game tokens and also improve security.

According to a further aspect of the present invention, there is provided an inspection system for inspecting a game token, including: a game token that includes an ID mark region entirely covered with an ink, and is provided with code information by irradiating a part of the ID mark region with laser light such that the irradiated part is denatured or removed; a camera for shooting the game token; and an inspection device configured to read the code information and determine authenticity of the game token based on an image shot by the camera.

with this configuration, authenticity of each of the game token can be determined by reading the code information provided by irradiation with laser light.

In the above inspection system, the ink that entirely covers the ID mark region may be an invisible ink, the inspection system may further include a lamp configured to irradiate the game token with light for visualizing the invisible ink, and the inspection device may read the code information that has been visualized by the irradiation with the light.

This configuration makes it possible to add the unique ID without affecting the design of each of the game tokens and also improve security, since the ID mark region cannot be visually observed under visible light.

According to a yet further aspect of the present invention, there is provided a game token including: a display surface that displays at least a value of the game token; and an ID mark region provided on the display surface and entirely covered with an ink, and a part of the ID mark region is irradiated with laser light so that the irradiated part is denatured or removed to add first code information to the game token.

With this configuration, the code information can be added by irradiation with laser light.

In the above game token, the ink that entirely covers the ID mark region may be a UV ink that emits light when irradiated with ultraviolet light, and the part irradiated with laser light may be denatured or removed so as not to emit light even when irradiated with ultraviolet light.

With this configuration, the first code information can be visualized by irradiating the ID mark region with ultraviolet light.

In the above game token, the ink that entirely covers the ID mark region may be an ink formed of an infrared absorbing material which absorbs infrared rays, and the part irradiated with laser light may be denatured or removed so as not to absorb infrared rays.

With this configuration, the first code information can be visualized by irradiating the ID mark region with infrared rays.

In the above game token, the game token may be manufactured by being cut out from a game token original plate, the game token may further includes second code information added with the ink, the first code information may be information that uniquely identifies the game token original plate, and the second code information may be information that specifies a position in the game token original plate.

With this configuration, information that uniquely identifies the game token can be configured by the first code information and the second code information.

The foregoing and other objects, features, aspects and advantages of the exemplary embodiments will become more apparent from the following detailed description of the exemplary embodiments when taken in conjunction with the accompanying drawings.

### BRIEF DESCRIPTION OF THE DRAWINGS

FIG. 1 is a cross-sectional view of a game token according to an embodiment of the present invention;
FIG. 2 is a plan view of the game token according to the embodiment of the present invention;
FIG. 3 is a perspective view showing a state in which a plurality of the game tokens are stacked according to the embodiment of the present invention;
FIG. 4 is an enlarged view of an invisible ink region according to the embodiment of the present invention;
FIG. 5 shows a game token original plate according to the embodiment of the present invention;
FIG. 6 is a flowchart of a manufacturing process of the game tokens according to the embodiment of the present invention;
FIG. 7 is a plan view of a sheet member serving as a printable layer according to the embodiment of the present invention;
FIG. 8 is a side view of the sheet member coated with a protective film according to the embodiment of the present invention;
FIG. 9 illustrates a stacking order of sheet members according to the embodiment of the present invention;
FIG. 10 is a flowchart of a manufacturing process of game tokens according to a modification of the embodiment of the present invention;
FIG. 11 is a cross-sectional view of a game token according to the modification of the embodiment of the present invention;
FIG. 12 shows a configuration for inspecting the game tokens on a game table according to the embodiment of the present invention;
FIG. 13 is a block diagram showing a configuration of an inspection system according to the embodiment of the present invention;
FIG. 14 is a cross-sectional view of a game token according to a modification of the embodiment of the present invention;
FIG. 15 shows a configuration for inspecting the game tokens collected for inspection according to a modification of the embodiment of the present invention; and
FIG. 16 is a block diagram of an inspection system according to the modification of the embodiment of the present invention.

### DETAILED DESCRIPTION OF NON-LIMITING EXAMPLE EMBODIMENTS

Hereinafter, an embodiment of the present invention will be described with reference to the drawings. It is to be noted that the embodiment described below is merely an example of implementing the present invention, and the present invention is not limited to the specific configurations described below. To practice the present invention, a specific configuration according to the embodiment may be adopted as appropriate.

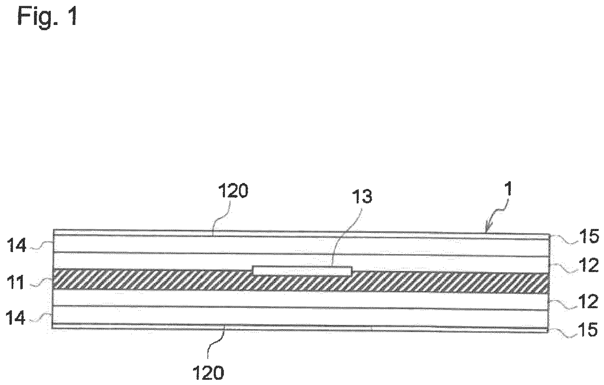

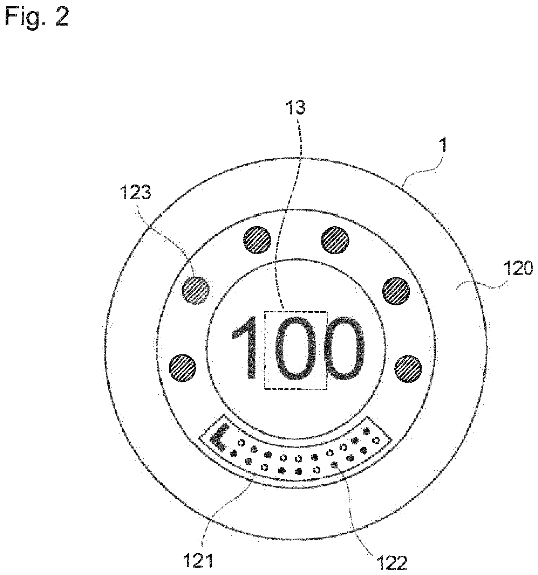

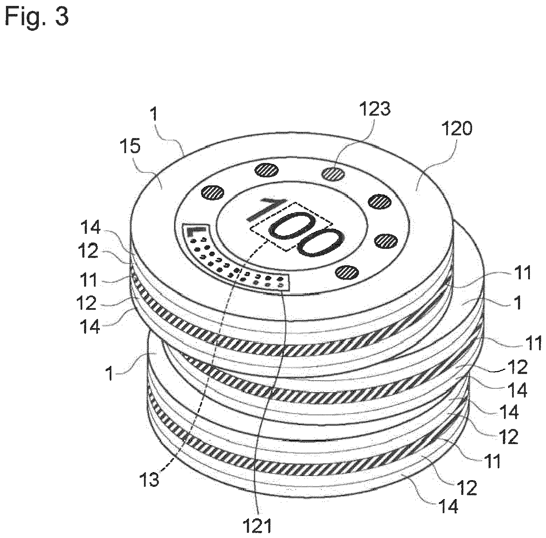

An inspection system of the present embodiment is a system for inspecting a game token used for table games using a game table. First, a configuration of the game token is described. FIG. 1 is a cross-sectional view of the game token, FIG. 2 is a plan view of the game token, and FIG. 3 is a perspective view showing a state in which a plurality of the game tokens are stacked.

A game token 1 has a shape of a multilayered disc formed by stamping out a circular shaped piece from a game token original plate that is obtained by bonding a plurality of plastic sheet members by thermocompression bonding. In the present embodiment, as will be described later, 50 circular shaped pieces are stamped out from one game token original plate to produce 50 game tokens 1.

As shown in FIG. 1, the game token 1 has a five-layer structure formed by sandwiching a three-layer structure between printable layers 14. The three-layer structure includes a colored layer (designated color layer) 11 colored with a designated color, and light-colored layers (common color layers) 12 on both sides of the colored layer 11. Note that a transparent protective film 15 such as varnish is provided on a surface of each of the printable layers 14, and when the protective film 15 is counted as one layer, the game token has a seven-layer structure. A Radio-frequency identification (RFID) tag 13 is provided between the colored layer 11 and one of the light-colored layers 12, so that the RFID tag 13 is embedded in the game token 1. Specifically, light-colored sheet members constituting the light-colored layers 12 sandwiches a colored sheet member constituting the colored layer 11 from both sides thereof, while the RFID tag 13 is sandwiched between one of the light-colored layers 12 and the colored layer 11 so as to be placed at the center of a portion to be stamped out for the game token 1. Then, both sides of these three sheet members are sandwiched between sheet members constituting the printable layers 14, and then the five sheet members thus obtained are bonded by thermocompression bonding, thereby forming the game token original plate 10. The game token 1 incorporating the RFID tag 13 at the center thereof and having a striped pattern consisting of the colored layer 11 and the two light-colored layers 12 sandwiching the colored layer 11 on the side surface thereof is obtained by stamping out a circular shaped piece from the game token original plate 10.

There are a plurality of types of the game tokens 1 (10 points, 20 points, 100 points, 1000 points, etc.) depending on the values thereof, and different types of the game tokens 1 have different colors (designated colors) of the colored layers 11. That is, the designated colors represent the types of the game tokens 1, for example, 10 points, 20 points, 100 points, and 1000 points are represented by red, green, yellow, and blue, respectively.

The game token 1 includes the colored layer 11 as an intermediate layer, and the both sides of the colored layer 11 are sandwiched between the light-colored layers 12. Thus, even when a plurality of the game tokens 1 are stacked as shown in FIG. 3, the colored layers 11 of the game tokens 1 are separated from each other in the stacking direction of the layers, so that the number and the type (value) of the game tokens 1 can be detected with the colors of the colored layers 11 each of which can be observed from the side surface of the game token 1. Note that the color of the light-colored layers 12 may be any color that is lighter than that of the colored layer 11, and may be white. The colors of the colored layers 11 are different from each other depending on the types of the game tokens 1, whereas the color of the light-colored layers 12 is common to all types of the game tokens 1.

As shown in FIG. 2, the surface of the printable layer 14 on each side of the game token 1 serves as a display surface 120, and includes at least a printed number indicating the value of the game token 1. In the example of FIG. 2, a number "100" indicating the value of 100 points is printed and displayed on the display surface 120. The display surface 120 is further provided with code information for examining the authenticity at a predetermined position.

The code information is printed on the display surface 120 with a transparent invisible ink which cannot be observed under visible light. The code information includes first code information added to an identification (ID) mark region 121 in which the invisible ink is solidly painted, and second code information added to the outside of the ID mark region 121. Note that the second code information may be provided in the ID mark region 121.

The first code information expresses information by the presence or absence of marks 122 at 10 predetermined positions arranged in two rows along the circumference of the game token 1 (total of 20 predetermined positions), and is capable of expressing the tenth power of four (the twentieth power of two) kinds of information.

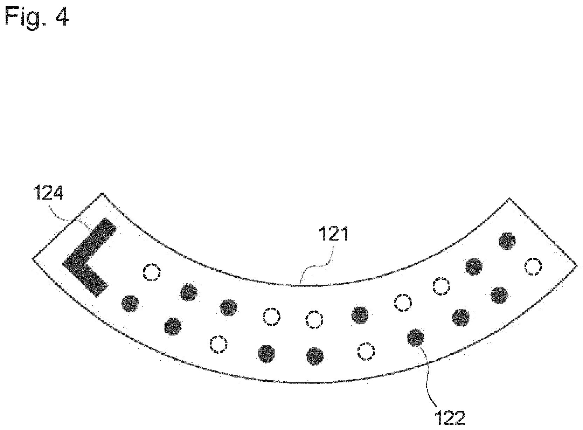

FIG. 4 is an enlarged view of the ID mark region 121. The ID mark region 121 is coated with a UV ink which is an invisible ink, and the marks 122 are formed by irradiating the UV ink with laser light. Although the UV ink emits fluorescent light when irradiated with ultraviolet light, the UV ink at the portions of the marks 122 that have been irradiated with laser light is denatured and does not emit light even when irradiated with ultraviolet light. Therefore, the portions that do not emit light in the ID mark region 121 can be observed in appearance as the marks 122, when the ID mark region 121 is entirely irradiated with ultraviolet light.

In the ID mark region 121, an L-shaped mark 124 serving as a reference mark is displayed. With reference to the L-shaped mark 124, the positions of the marks 122 at the predetermined positions in 2 rows and 10 columns can be specified. The ID mark region 121 is provided with a unique ID as the first code information that enables individual identification by appearance. This ID enables individual identification of the game token original plate 10 for manufacturing the game tokens 1.

That is, the IDs of the ID mark regions 121 on a plurality of the game tokens 1 (50 pieces in the present embodiment) obtained from one game token original plate 10 are identical to each other. Provided that one game token original plate 10 is one group, the ID represented by the first code information of the ID mark region 121 is a unique ID that enables individual identification of the game tokens 1 in a group unit. As described above, the ID mark region 121 is a region to which a unique ID is provided by using the marks 122.

The ID indicating the first code information is stored in a database 56 in association with any one of or a combination of information on a machine used for manufacturing the game token original plate 10, a sequence of manufacture, time of manufacture, the manufacturing information.

On the other hand, the second code information expresses information by the presence or absence of marks 123 at six predetermined positions aligned along the circumference of the game token 1, and is capable of expressing the sixth power of two kinds of information. The second code information also indicates a unique ID that enables individual identification by appearance. This ID enables individual identification of the position on the game token original plate 10 for manufacturing the game tokens 1. In other words, the second code information indicates the position on the game token original plate 10, and thus the second code information of the game tokens 1 cut out from the same position of different game token original plates 10 is the same, and the second code information of the game tokens 1 cut out from one game token original plate 10 is different from one another.

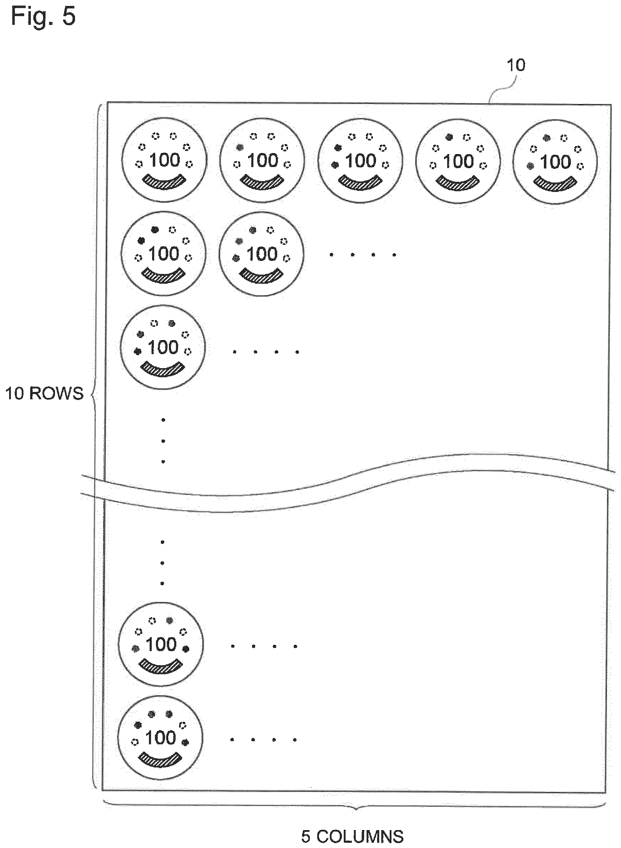

FIG. 5 is a plan view of one game token original plate 10 for manufacturing a plurality of the game tokens 1. As described above, one game token original plate 10 produces a total of fifty game tokens 1 in 10 rows and 5 columns. As shown in FIG. 5, in one game token original plate 10, 50 game tokens 1 include different combinations of marks 123 as the second code information so as to specify the positions of the game tokens 1 on the game token original plate 10.

In view of the above, the first code information can uniquely identify the game token original plate 10 for manufacturing the game tokens 1, and the second code information can uniquely identify the position of each of the game tokens 1 on the game token original plate 10 for manufacturing the game tokens 1. Thus, each of the game tokens 1 can be uniquely identified by specifying the first code information and the second code information. Since the first code information can express the twentieth power of two kinds of information and the second code information can express the sixth power of two kinds of information as described above, a combination of the first code information and the second code information can express the twenty-sixth power of two kinds of information.

The RFID tag 13 stores a unique ID (RFID) as information uniquely identifying each of the game tokens 1 (RFID tag information). The RFID tag information may be the same information as the code information or different information from the code information that is composed of the first code information expressed in invisible ink and the second code information on the display surface 120 of the printable layer 14.

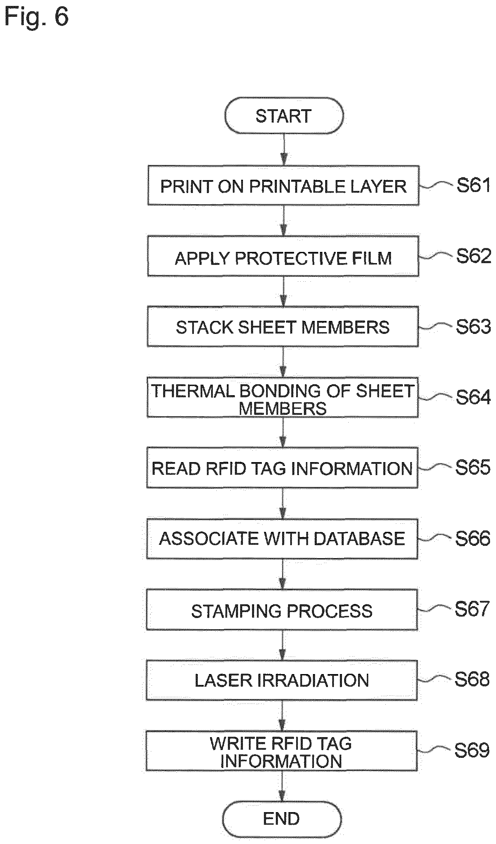

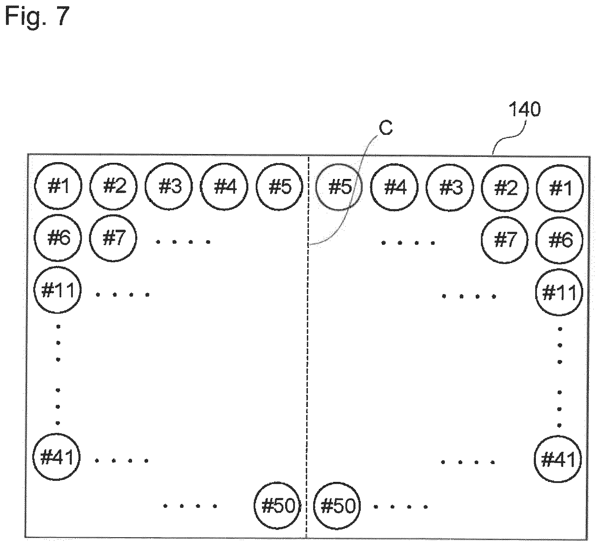

FIG. 6 is a flowchart of a manufacturing process of the game tokens 1. First, printing is performed on a sheet member serving as the printable layer 14 (step S61). FIG. 7 is a plan view of a sheet member 140 serving as the printable layer 14. As shown in FIG. 7, the sheet member 140 includes a portion to become an upper printable layer 14 and a portion to become a lower printable layer 14 are arranged side by side, and the second code information of one to fifty is arranged line-symmetrically across a center line C positioned at the horizontal center of the sheet member 140. That is, printing corresponding to the game tokens 1 in 10 rows and 10 columns is performed on one sheet member 140. In FIG. 7, #1 to #50 each indicate the second code information (that is, information for specifying the position of the game tokens 1 on the game token original plate 10), but in practice, the items shown in FIG. 5 are printed. When the printing on the sheet member 140 is finished, the protective film 150 is applied on the sheet member 140 (step S62).

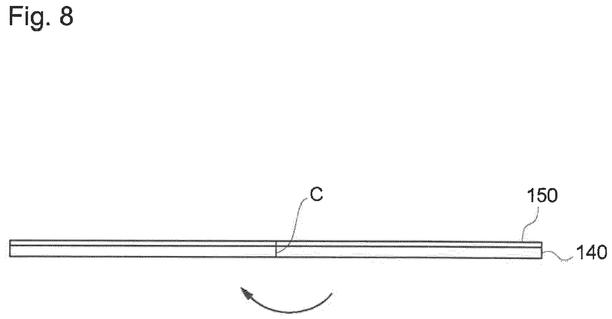

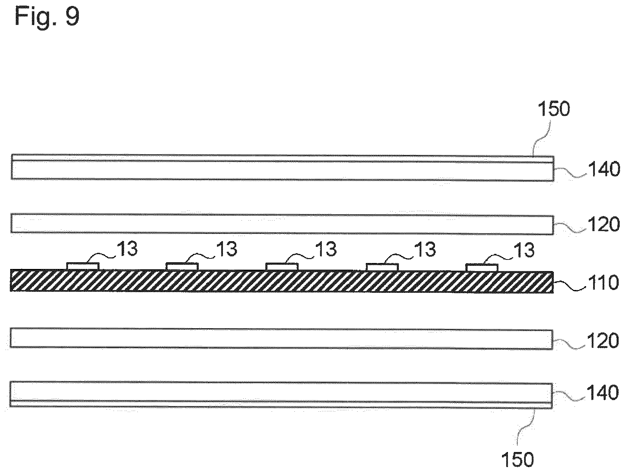

Next, the sheet members 140 respectively coated with the protective films 150, the sheet members 120 serving as the light-colored layers 12, and the sheet member 110 serving as the colored layer 11 are stacked (step S63). FIG. 8 is a side view of the sheet member 140 coated with the protective film 150, and FIG. 9 is a view illustrating the stacking order of the sheet members.

As shown in FIG. 9, RFID tags 13 are disposed at positions corresponding to the game tokens 1 on the sheet member 110 serving as a colored layer, the sheet members 120 serving as the light-colored layers 12 are disposed on both sides of the sheet member 110, and the sheet members 140 are respectively disposed on the sheet members 120. At this time, the upper one of the sheet members 140 is disposed with a printable surface (a surface coated with the protective film 150) facing upward, and the lower one of the sheet members 140 is disposed with a printable surface (a surface coated with the protective film 150) facing downward.

Since the second code information is printed line-symmetrically across the center line C (see FIG. 7), the positions of the second code information in the upper and lower sheet members 140 coincide with each other when the sheet member 140 including 10 rows and 10 columns of the second information is cut into two pieces along the center line C and one of the pieces (a piece on the right side in FIG. 8) is folded back around the center line C (see FIG. 8) such that the sheet members are stacked as shown in FIG. 9. In this manner, the upper and lower sheet members 140 are formed of one sheet member at a printing stage, and are cut apart into the upper and lower sheet members 140 at the time of stacking the sheet members, which results in reduction in occurrence of erroneous combination of the upper and lower sheet members 140.

Next, the sheet members stacked in the order shown in FIG. 9 are subjected to thermocompression bonding (step S64). Thereby, the game token original plate 10 is formed. The RFID tag information is read out from the 50 RFID tags 13 embedded in the game token original plate 10 by using an RFID reader (step S65), and associated with the information uniquely identifying the game token original plate 10 (ID identifying the sheet member 140) in the database (step S66).

Next, a stamping process for stamping out the 50 game tokens 1 from the game token original plate 10 is performed (step S67). Thereby, 50 game tokens 1 are obtained. The first code information is written by laser irradiation one by one on the ID mark regions 121 (printed on both surfaces) of the 50 game tokens 1 (step S68). As described above, the RFID tag information in each of the RFID tags 13 is associated with the first code information (ID of the game token original plate 10) in the database, and thus the RFID tag information is read out with the RFID reader, and the first code information corresponding to the read RFID tag information is written at the time of writing step by using laser irradiation.

Finally, information is written in each of the RFID tags 13 by using an RFID writer (step S69). Here, as the RFID tag information, the amount of the game token, information on the casino, information on junkets, an attribute of the token such as whether a rolling chip or a cash chip (whether a cashable chip or not) and other information or code desired by the user are written in addition to the first code information and the second code information.

As described above, in the present embodiment, the printing step of the second code information and the ID mark region (step S61) is performed on the printable layer 14 in a state of the sheet member 140 before the stamping process (step S67), and the writing step of the first code information by laser irradiation on the ID mark region 121 (step S68) is performed on the ID mark region 121 of each of the game tokens 1 which has been stamped into pieces after the stamping process (step S67). If the laser irradiation step (step S68) is to be performed before the stamping process (step S67) (that is, laser irradiation is performed on the game token original plate 10), it becomes necessary to arrange a plurality of laser irradiators, or in the case of to move a single laser irradiator, it becomes necessary to move the laser irradiator or move the game token original plate 10. However, since laser irradiators are relatively expensive, preparation of a plurality of laser irradiators is disadvantageous in cost. Further, a mechanism for moving a laser irradiator or the game token original plate 10 requires high accuracy. In addition, it is not easy to move a laser irradiator as a laser irradiator is heavy. For these reasons, the first code information is written on the game token 1 by laser irradiation one by one after the stamping process (step S67). Since the information to be written by laser irradiation can be determined by reading the RFID tag information that has been written in the RFID tag 13, the information to be written can be correctly written by laser irradiation by reading the RFID tag information at the time of laser irradiation step.

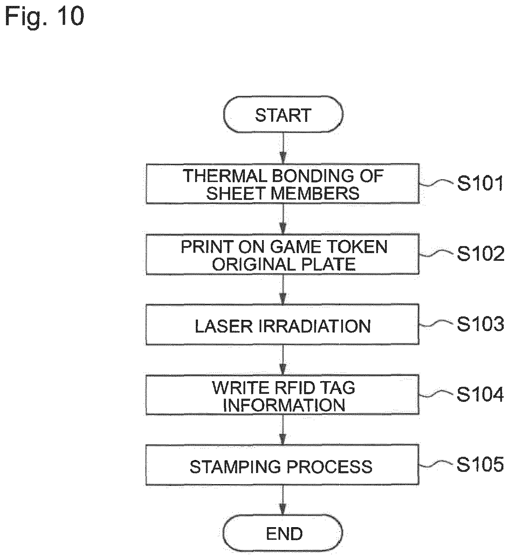

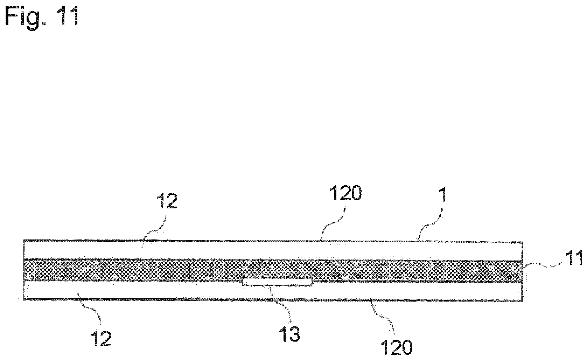

FIG. 10 is a flowchart of another example of the manufacturing process of the game tokens 1. In this manufacturing process, a game token 1 having a three-layer structure shown in FIG. 11 is manufactured. As shown in FIG. 11, the game token 1 has a three-layer structure including the colored layer 11 and the upper and lower light-colored layers 12 sandwiching the colored layer 11, and each of the surfaces of the light-colored layer 12 serves as the display surface 120. That is, printing is performed directly on the surface of the light-colored layer 12. To manufacture the game tokens 1, a light-colored sheet member is prepared, the RFID tag 13 is placed thereon at the center of each of the stamping positions for the game tokens 1, and then a sheet member colored with a designated color and another light-colored sheet member are stacked in this order to form a laminated structure formed of a plurality of plastic layers. Then, the laminated structure is pressed in the stacking direction while being applied with heat, so that the layers are thermally welded to each other, thereby producing a game token original plate 10 having a three-layer structure (step S101).

Next, numbers indicating the value of each of the game tokens 1, the ID mark regions 121 for indicating the first code information, and the marks 123 indicating the second code information are printed on the display surface 120 of the game token original plate 10 (step S102). At this time, the ID mark region 121 is simply filled in through the entire area thereof at any position, that is, the first code information has not been assigned, while a combination of the marks 123 indicating the second code information varies depending on the position on the game token original plate 10.

In other words, at the printing step on the game token original plate 10, a UV ink, which is an invisible ink, is applied to the entire are of the ID mark region 121 (solid coating), and an ID corresponding to the position of each of the game tokens 1 on the game token original plate 10 is added as the second code information. As described above, the first code information for uniquely identifying the game token original plate 10 is to be added by irradiating the ID mark regions 121 with laser light, and thus, a plurality of game token original plates 10 can be printed with the same printing plate at this printing step.

When printing is finished, laser light is applied to the plurality of ID mark regions 121 on the game token original plate 10 in order to assign the first code information (step S103). As described above, the first code information is information which can individually identify the game token original plate 10, and thus the same first code information is assigned to the plurality of ID mark regions 121 on the same game token original plate 10.

Next, RFID tag information is written into each of the RFID tags 13 using an RFID writer (step S104). Upon completion of the above steps, a stamping process is performed on each position on the game token original plate 10 corresponding to a plurality of the game tokens 1 using a mold (step S105), and disc-shaped game tokens 1 are obtained. The writing of the RFID tag information may be performed before the laser irradiation step, before the printing step, or before the thermocompression bonding step.

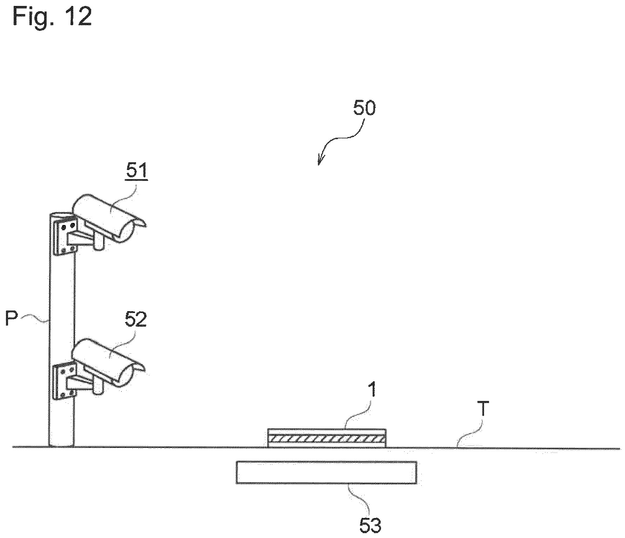

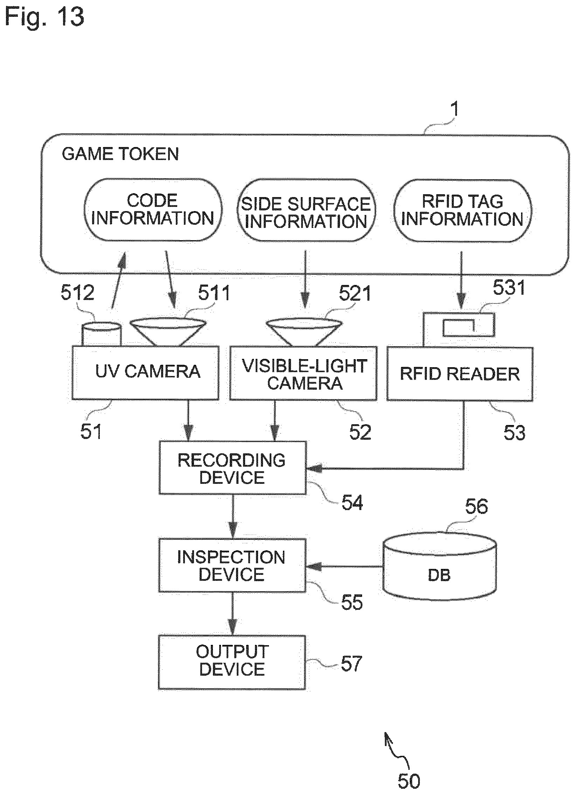

Next, an inspection system including the game tokens 1 will be described. FIG. 12 is a diagram showing a configuration for inspecting the game token 1 placed on the game table T, and FIG. 13 is a block diagram showing a configuration of the inspection system.

As shown in FIG. 13, an inspection system 50 includes a UV camera 51, a visible-light camera 52, an RFID reader 53, a recording device 54, an inspection device 55, a database 56, and an output device 57. The UV camera 51 includes an ultraviolet irradiation lamp 512 in addition to a general configuration of a digital camera such as a lens 511 and an imaging device. The ultraviolet irradiation lamp 512 irradiates a visual field of the UV camera 51 with ultraviolet light. The UV camera 51 shoots a light-emitting object (UV image) due to the UV ink as the game token 1 is irradiated with the illuminated ultraviolet irradiation lamp 512. The visible-light camera 52 includes a general configuration of a digital camera, such as a lens 521 and an imaging device.

As shown in FIG. 12, a pole P stands on the game table T. The UV camera 51 is attached to the pole P at a relatively high position, and is set in an obliquely downward direction so as to shoot a surface of the table from above. The visible-light camera 52 is attached to the pole P at a relatively low position, and is set in a substantially horizontal direction so as to shoot a good image of the side surface of the game token 1 placed on the game table T.

The RFID reader 53 includes an antenna 531 configured to transmit and receive electromagnetic waves to read the RFID tag information from the RFID tag 13 in the game token 1. The RFID reader 53 reads the RFID tag information based on the electromagnetic waves received by the antenna 531. As shown in FIG. 12, the RFID reader 53 is embedded under the surface of the game table T.

The recording device 54 records all of a UV image on the display surface 120 of the game token 1 captured by the UV camera 51, a visible-light image of the side surface of the game token 1 captured by the visible-light camera 52, and the RFID tag information stored in the RFID tag 13 of the game token 1 read by the RFID reader 53.

The inspection device 55 identifies an image by performing image recognition processing on the recorded results by the recording device 54, i.e., a UV image, a visible-light image, and an RFID tag information recorded in the recording device 54, thereby determining authenticity of the game token 1. The inspection device 55 reads the code information based on the UV image on the display surface 120 and reads side-surface information (the color of the colored layer) based on a visible-light image of the side surface of the game token 1. The inspection device 55 is equipped with a machine learning model for recognizing a UV image captured by the UV camera 51 and a visible-light image captured by the visible-light camera 52. More specifically, the inspection device 55 can perform image recognition processing using a neural network.

When the code information and the RFID tag information are the same information, the database 56 stores the code information of the game token 1 that may be used, in association with any one of or a combination of the information on the type of the game token 1, the machine used for manufacturing the game token original plate 10 of the game token 1, a sequence of manufacture, time of manufacture, and the manufacturing information.

The inspection device 55 determines whether or not the recognized code information matches the RFID tag information read by the RFID reader 53. In the genuine game token 1, the recognized code information and the RFID tag information read by the RFID reader 53 should match each other, and when these pieces of information do not match each other, the inspection device 55 determines that the game token 1 is a counterfeit game token 1.

When the code information matches the RFID tag information, the inspection device 55 further determines whether or not the code information is stored in the database 56. In the case where the UV image and the recognized information in the RFID tag 13 are not stored in the database 56, the inspection device 55 determine that the game token 1 is a counterfeit game token 1.

The inspection device 55 further determines whether the type of the game token 1 associated with the recognized information in the database 56 matches the type recognized from the visible-light image of the side surface of the game token 1. When these types do not match each other, the inspection device 55 determines that the game token 1 is a counterfeit game token 1.

When the code information and the RFID tag information are not the same information, the database 56 stores the code information of the game token 1 that may be used, in association with any one of or a combination of the information on the type of the game token 1, the RFID tag information, the machine used for manufacturing the game token original plate 10 of the game token 1, a sequence of manufacture, time of manufacture, and the manufacturing information.

The inspection device 55 determines whether or not a combination of the code information recognized from a UV image of the display surface 120, the RFID tag information read by the RFID reader 53, and information on the type of the game token 1 recognized from a visible-light image of the side surface of the game token 1, exists in the database 56, thereby determining authenticity of the game token 1.

The inspection device 55 determines that the game token 1 is a genuine game token 1 except the above described cases in which the game token 1 is determined to be counterfeit. The output device 57 outputs a result of the determination on the authenticity of the game token 1, i.e., a result of the determination as to whether the game token 1 is genuine or counterfeit. The output device 57 may be a display device configured to display a result of the determination using an image, may be a speaker configured to output a result of the determination using a sound, or may be a lamp configured to output a result of the determination using a color. Further, the result of the determination by the inspection device 55 is recorded in the recording device 54.

As described above, according to the game token 1 of the present embodiment, the code information is added to the ID mark region 121 such that the ID mark region 121 of the display surface 120 is solidly applied with invisible ink that is visualized by ultraviolet irradiation, and then the ID mark region 121 is irradiated with laser light and is denatured at the irradiated portions to form the marks 122 that are not visualized (do not emit light) even by ultraviolet irradiation, and such irradiated portions (the positions of the marks 122) are selected according to the code information. The code information (first code information) can be exposed as the marks 122 which does not emit light by irradiating the ID mark region 121 with ultraviolet light.

Although the first code information can be formed by drawing the marks 122 with an invisible ink, in such a case, only the portions of the marks 122 protrude on the display surface 120, which may cause wearing out of the marks 122 in the course of using the game token 1. In particular, in the case where the marks are relatively small in order to express a lot of information like the marks 122, there is a possibility that correct information cannot be expressed due to wearing out. On the other hand, in the present embodiment, the marks 122 constituting the first code information do not protrude on the display surface 120, and thus there is no possibility of loss of the marks 122 due to wearing out.

In addition, in the game token 1 of the present embodiment, the marks 123 are also printed with an invisible ink on the display surface 120 as the second code information. While the first code information is information for uniquely identifying the game token original plate 10, the second code information is information for uniquely identifying the position on the game token original plate 10, and a combination of these pieces of information constitutes a unique ID that uniquely identifies the game token 1. With this configuration, the same printing can be performed on all the game token original plates 10 at the time of printing the marks 123 of the second code information and the invisible ink region 120, and thus the same printing plate can be used for all the game token original plates 10.

Since the first code information for uniquely identifying the game token original plate 10 is added by laser irradiation to the game token original plate 10 for which the application of the invisible ink has been completed, the same first code information can be efficiently added to a plurality of game tokens 1 cut out from the same game token original plate 10.

In addition, since the invisible ink is transparent, the code information cannot be visually observed during a normal use (under visible light). Thus, the design of the display surface 120 of the game token 1 is not affected, and also security is improved.

### (Modification)

In the above embodiment, a UV ink that emits fluorescence by irradiating ultraviolet light is employed as an invisible ink, but the invisible ink is not limited thereto, and may be an infrared absorbing material, for example. When an infrared absorbing material is employed as an invisible ink, an ink formed of an infrared absorbing material is coated (printed) on the entire surface of the ID mark region 121, and laser light is applied to the portions corresponding to the first code information in the ID mark region 121 that has been entirely printed with the infrared absorbing material, so that the irradiated portions are denatured to form the marks 122.

In this case, the denatured portions at the marks 122 cannot absorb infrared rays. Therefore, when the ID mark region 121 is irradiated with infrared rays to read the first code information, the marks 122 reflects the infrared rays without absorbing the infrared rays, while an area excluding the marks 122 in the ID mark region 121 absorbs the infrared rays with no reflection or with a small amount of reflection. With this configuration, the first code information composed of the marks 122 can be read by shooting the ID mark region 121 with an infrared camera.

For this purpose, the inspection system includes an infrared camera in place of the UV camera 51. The infrared camera includes an infrared irradiation light configured to emit infrared rays and an infrared detection element configured to detect an infrared image from a subject through a lens to generate an infrared image.

In the above embodiment, the marks 123 are formed by partially irradiating the ID mark region 121 with laser light to denature the invisible ink at the irradiated portions, but the invisible ink may be removed by laser irradiation at the irradiated portions. In this case, laser irradiation needs to be stronger than in the above embodiment.

Even in the case where the marks 122 are formed by removing the invisible ink, the arrangement of the marks 122 is visualized by irradiating the ID mark region 121 with ultraviolet light when the invisible ink is a UV ink in the same manner as the above embodiment, and the arrangement of the marks 122 is visualized by irradiating the ID mark region 121 with infrared rays when the invisible ink is an ink of an infrared absorbing material.

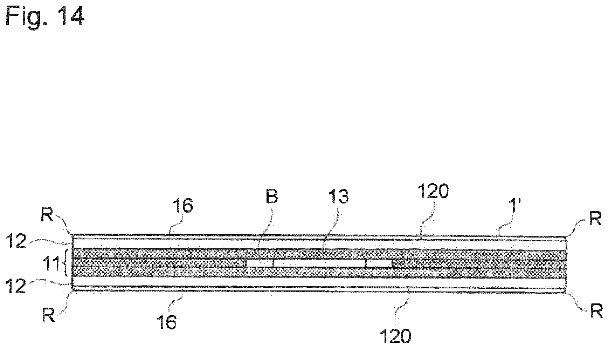

FIG. 14 is a cross-sectional view of a game token 1' according to a modification. The game token 1' has a multilayer structure formed of stacked plastic layers with different colors, in which at least a colored layer (designated color layer) 11 is provided as an intermediate layer, and light-colored layers (common color layer) 12 are stacked on both sides of the intermediate colored layer 11. It is desirable that the color of the light-colored layers 12 is lighter than the color of the colored layer 11. In this way, the game token 1' has a multilayer structure including the colored layer 11 and the light-colored layers 12 that are stacked on both sides of the intermediate colored layer 11 such that a striped pattern in the stacking direction is formed on the side surface of the game token 1', thereby enabling identification of the type of the game token 1' depending on the color of the colored layer 11.

In this modification, as shown in FIG. 14, the colored layer 11 is formed by a plurality of layers (three layers in FIG. 14) that are colored with a designated color, but individual layers in the three-layer structure cannot be visually observed since the layers colored with a designated color are bonded to each other by thermocompression bonding. A part of the intermediate layer among the three layers of the colored layer 11 is provided with a hollow B, and the RFID tag 13 is embedded in the hollow B.

In the same manner as the above embodiment, a number representing the type (value) of the game token 1' is printed on the display surfaces 120 of the game token 1', and transparent layers 16 are provided as the outermost layers, and the layers are bonded to each other by thermocompression bonding to form at least a five-layer structure. The game token 1' is formed such that plastic sheet members forming the layers (colored layer 11, light-colored layers 12, and transparent layers 16) are stacked, an RFID tag 13 is placed in the hollow B, and the stacked sheet members are thermally bonded to each other into a closely adhered state (a five-layer structure or the like) to form a game token original plate 10, and then, the game token original plate 10 is stamped by a press or the like into circular-shaped pieces, rectangular-shaped pieces, or the like.

At the time of stamping out the game token original plate 10 by a press, a rounding process (rounded corner) is applied to the edge of each of the outermost transparent layers 16 by designing the dimensions of a die and a punch for stamping. With this configuration, the surfaces of the light-colored layers 12 are deformed and prevented from being exposed on the side surface of the game token 1'. Further, the end of the game token 1' is prevented from being sharp so as not to hurt the hand or not to damage other game tokens 1'.

As shown in FIG. 14, the game token 1' has a stacked multi-layer structure, and includes a striped pattern in the stacking direction that appears sharply on the side surface of the game token 1', so that the color of the colored layer 11 (type of the game token 1') and the number of the game tokens 1' can be easily and accurately determined by image recognition by the inspection device 55.

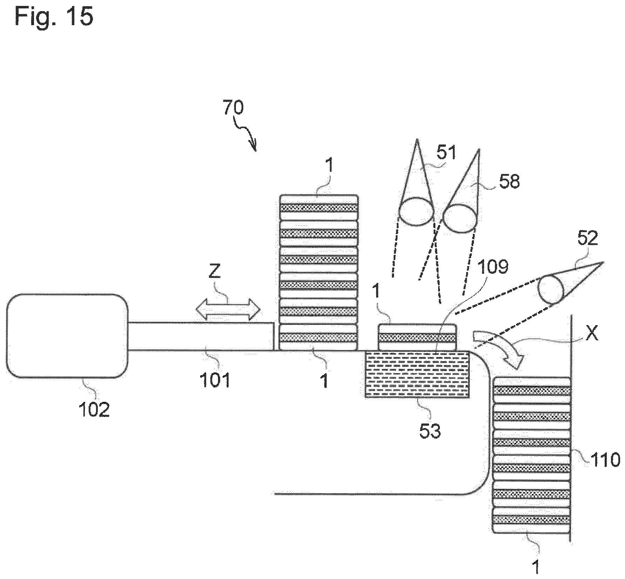

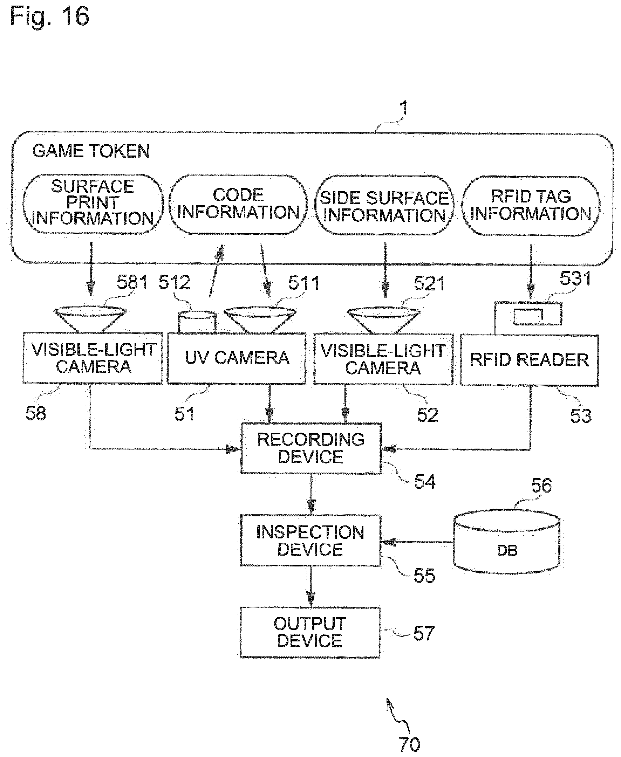

FIG. 15 is a view showing a configuration for inspecting the game tokens 1 collected for inspection according to a modification, and FIG. 16 is a block diagram of an inspection system according to the modification. In an inspection system 70 of FIG. 16, the same symbols are given to the same components as those of the inspection system 50 shown in FIG. 13, and a detailed description thereof will be omitted. Although a configuration of the inspection system 70 is similar to that of the inspection system 50, the inspection system 70 includes a visible-light camera 58 configured to shoot surface print information (in particular, the number representing the type) in addition to the UV camera 51 configured to shoot the code information printed by the invisible ink. The visible-light camera 58 has a general configuration of a digital camera including a lens 581 and an imaging device.

In the same manner as the inspection system 50, the inspection system 70 includes a UV camera 51 configured to shoot the code information on the display surface 120 of the game token 1, a visible-light camera 52 configured to shoot a striped pattern on the side surface of the game token 1, an RFID reader 53 configured to read information in the RFID tag 13 of the game token 1, a recording device 54, an inspection device 55, a database 56, and an output device 57.

As shown in FIG. 15, the inspection system 70 includes an extrusion device 102 configured to move an extrusion unit 101 along an arrow Z. The extrusion device 102 moves the extrusion unit 101 along the arrow Z, so that the stacked game tokens 1 are supplied one by one to a reading stage 109. On the reading stage 109, the visible-light camera 58, the UV camera 51, and the visible-light camera 52 respectively shoot the surface print information, the code information, and the side surface of the game token 1, and the RFID reader 53 reads the RFID tag 13 embedded in the game token 1. The game token 1 for which reading has been completed is pushed out by a succeeding game token 1 and falls in the direction of an arrow X. The game token 1 falls in the direction of the arrow X is kept in a holding stage 110.

A method of determining authenticity by the inspection device 55 may be the same as in the above embodiment. Although the surface print information and the code information are printed on both of the two display surfaces of the game token 1 to be inspected by the inspection system 70, in the case where the surface print information and the code information of the game token 1 are provided on one side of the game token 1, the UV camera 51 and the visible-light camera 58 may be provided on both of the front side and the back side. With this configuration, the surface print information and the code information printed on only one side of the game token 1 can be shot respectively by the UV camera 51 and the visible-light camera 58 provided on at least one of the front side and the back side.

Although the RFID tag 13 stores the RFID tag information in addition to the code information printed with the invisible ink, and the RFID reader 53 reads the RFID tag information in the game token 1 according to the above embodiment, an ID code (side ID) may be printed on the side surface of the game token 1 instead of or in addition to the RFID tag information stored in the RFID tag 13. The side ID may be printed with an ordinary ink or may be printed with an invisible ink.

In the case where the side ID is added, the contents of the side ID are stored in the database 56 in association with the code information in the same manner as in the above embodiment, and the inspection device 55 refers to the database 56 to determine whether or not a recognized side ID is stored in the database 56.

Although the code information is expressed by arrangement of the marks 122 and the marks 123 in the game token 1 according to the above embodiment, the code information may be expressed by numbers or letters. Likewise, the above described side ID may be expressed by arrangement of marks or may be expressed by numbers or letters.

Although the first code information is information for identifying the game token original plate 10 according to the game token 1 of the above embodiment, the first code information may be identification information for uniquely identifying the game token 1. In addition, the code information may be formed of only the first code information without second code information.

At least the following invention is disclosed by the above embodiment and its modifications.
(1) An inspection system for a game token used in a table game, including:
   a camera configured to shoot the game token;
   a recording device configured to record an image of the game token shot by the camera; and
   an inspection device configured to determine authenticity of the game token using the image recorded in the recording device,
   wherein the game token includes code information,
   the inspection device determines authenticity of the game token by recognizing the code information from the image recorded in the recording device,
   the game token includes an invisible ink region on which an invisible ink is coated, and
   the code information is added to the game token by irradiating the invisible ink region with laser light so that the invisible ink constituting the invisible ink region is partially denatured or removed.
(2) The inspection system according to (1), wherein the code information is a unique ID capable of individually identifying the game token or a unique ID capable of individually identifying a group to which the game token belongs.
(3) The inspection system according to (1), wherein the code information is associated with any one of a machine used for manufacturing the game token, a sequence of manufacture, time of manufacture, and manufacturing information in a database.
(4) The inspection system according to any one of (1) to (3),
   wherein the game token includes an RFID tag, and further includes RFID tag information stored in the RFID tag or an ID code written on a side surface of the game token in addition to the code information,
   the inspection system further includes a database configured to associate the code information with the RFID tag information or the ID code,
   the camera is configured to shoot the code information added to the game token to be inspected, and
   the inspection device refers to the database and compares the code information with the RFID tag information or the ID code to determine authenticity of the game tokens.
(5) The inspection system according to any one of (1) to (4), wherein the camera includes a lamp configured to visualize the invisible ink, and shoots the visualized code information.
(6) The inspection system according to any one of (1) to (5), wherein the code information is a code expressed by a character or a mark.
(7) The inspection system according to any one of (1) to (6), wherein the invisible ink is transparent.
(8) A game token to which code information for determining authenticity of the game token is added, including:
   an invisible ink region formed of a UV ink or an infrared absorbing material,
   wherein the code information is added by irradiating the invisible ink region with laser light so that the UV ink or the infrared absorbing material constituting the invisible ink region is partially denatured or removed.
(9) The game token according to (8), wherein the code information is a unique ID capable of individually identifying the game token or a unique ID capable of individually identifying a group to which the game token belongs.
(10) The game token according to (9), wherein the code information is associated with at least one of a machine used for manufacturing the game token, a sequence of manufacture, time of manufacture, and manufacturing information in a database.
(11) The game token according to any one of (8) to (10), including an RFID tag, and further including RFID tag information stored in the RFID tag or an ID code written on a side surface of the game token in addition to the code information,
   wherein authenticity of the game token is determined by referring to the database that associates the code information with the RFID tag information or the ID code, and comparing the code information with the RFID tag information or the ID code that is added to the game token to be inspected for authenticity.
(12) The game token according to any one of (8) to (11), wherein the code information is a code expressed by a character or a mark.
(13) The game token according to any one of (8) to (12), wherein the invisible ink is transparent.

## Claims

1. An inspection system for game tokens for games using a game table, comprising:
a recording device configured to record types and authenticity of the game tokens using a camera; and
an inspection device configured to determine authenticity of the game tokens using a result recorded by the recording device,
wherein each of the game tokens is provided with a unique ID for individual identification in appearance,
the inspection device reads the unique ID of a target game token for inspection among the game tokens using the camera, and determines authenticity of the target game token based on the read unique ID, and
the unique ID for individual identification or for individual identification in a specific group unit is formed by irradiating an ID mark region that is formed of a UV ink or an infrared absorbing material with laser light to partially denature or remove the UV ink or the infrared absorbing material that forms the ID mark region.

2. The inspection system according to claim 1,
wherein the unique ID is associated with any one of a machine used for manufacturing the game tokens, a sequence of manufacture, time of manufacture, and manufacturing information in a database.

3. The inspection system according to claim 1 or 2,
wherein each of the game tokens further includes an RFID or an ID code aside from the unique ID for individual identification that is provided on an outer layer of the game token,
the inspection system further includes a database configured to associate the unique ID provided on the outer layer with the RFID or the ID code, and
the inspection device reads the unique ID added to the target game token for inspection using the camera, and determines authenticity of the target game token based on a result of comparison of the read unique ID and the RFID or the ID code with contents of the database.

4. The inspection system according to claim 1 or 2,
wherein the inspection device is configured to determine authenticity of the game tokens using a normal camera, and an infrared camera or a UV camera.

5. The inspection system according to claim 1 or 2, wherein the unique ID provided on each of the game tokens is a code expressed by a character or a mark.

6. The inspection system according to claim 1 or 2, wherein the unique ID provided on each of the game tokens is transparent.

7. A game token comprising a unique ID for individual identification provided on an outer layer of the game token,
wherein the unique ID is read by a camera and allows determination of authenticity of the game token, and
the unique ID for individual identification or for individual identification in a specific group unit is formed by irradiating an ID mark region that is formed of a UV ink or an infrared absorbing material with laser light to partially denature or remove the UV ink or the infrared absorbing material that forms the ID mark region.

8. The game token according to claim 7, wherein the unique ID is associated with any one of a machine used for manufacturing the game tokens, a sequence of manufacture, time of manufacture, and manufacturing information by a database.

9. The game token according to claim 7 or 8, further comprising an RFID or an ID code aside from the unique ID for individual identification that is provided on the outer layer of the game token,
wherein, by using a database configured to associate the unique ID provided on the outer layer of the game token with the RFID or the ID code, authenticity of the target game token is determined based on a result of comparison of the unique ID assigned to the target game token and the RFID or the ID code with contents of the database.

10. The game token according to any one of claims 7 to 9, wherein the unique ID provided on the game token is a code expressed by a character or a mark.

11. The game token according to any one of claims 7 to 10, wherein the unique ID provided on the game token is transparent.

12. An inspection system for inspecting a game token, comprising:
a game token that includes an ID mark region entirely covered with an ink, and is provided with code information by irradiating a part of the ID mark region with laser light such that the irradiated part is denatured or removed;
a camera for shooting the game token; and
an inspection device configured to read the code information and determine authenticity of the game token based on an image shot by the camera.

13. The inspection system according to claim 12,
wherein the ink that entirely covers the ID mark region is an invisible ink,
the inspection system further includes a lamp configured to irradiate the game token with light for visualizing the invisible ink, and
the inspection device reads the code information that has been visualized by the irradiation with the light.

14. A game token comprising:
a display surface that displays at least a value of the game token; and
an ID mark region provided on the display surface and entirely covered with an ink,
wherein a part of the ID mark region is irradiated with laser light so that the irradiated part is denatured or removed to add first code information to the game token.

15. The game token according to claim 14,
wherein the ink that entirely covers the ID mark region is a UV ink that emits light when irradiated with ultraviolet light, and
the part irradiated with laser light is denatured or removed so as not to emit light even when irradiated with ultraviolet light.

16. The game token according to claim 14,
wherein the ink that entirely covers the ID mark region is an ink formed of an infrared absorbing material which absorbs infrared rays, and
the part irradiated with laser light is denatured or removed so as not to absorb infrared rays.

17. The game token according to claim 14,
wherein the game token is manufactured by being cut out from a game token original plate,
the game token further includes second code information added with the ink,
the first code information is information that uniquely identifies the game token original plate, and
the second code information is information that specifies a position in the game token original plate.
